# EUROPEAN PATENT APPLICATION

(11) **EP 1 785 435 A1**
(43) Date of publication of application: **16.05.2007**
(21) Application number: 05256920.9
(22) Date of filing: 09.11.2005
(51) Int. Cl.: C08F 10/00, C08F 4/619

(54) **Method for Studying Catalyst Homogeneity**

(71) Applicant: Borealis Technology Oy, 06101 Porvoo (FI)
(72) Inventor: Kallio, Kalle, 06400 Porvoo (FI); Maaranen, Janne, 04260 Kerava (FI); Kokko, Esa, 01520 Vantaa (FI); Ojanpera, Vuokko, 06400 Porvoo (FI)
(74) Representative: Campbell, Neil Boyd

(57) **Abstract**

A method for identifying whether a catalyst batch is inhomogeneous or homogeneous comprising:
(i) obtaining a sample from said catalyst batch;
(ii) polymerising at least one olefin in the presence of said sample to form an olefin polymer;
(iii) compression moulding at least a part of said olefin polymer to form a sheet having a thickness of 20 to 200 microns;
(iv) counting the number of gels present within said sheet or a given area thereof;
(v) depending on the number of gels counted in step (iv), determining whether the catalyst batch is inhomogeneous or homogeneous with reference to a standard.

## Description

This invention relates to a method for studying catalyst homogeneity to allow detection of inhomogeneities in catalyst batches. In particular, the invention relates to a method in which the presence of gels in compression moulded sheets is detected as evidence of catalyst inhomogeneity.

Gels or fish eyes are visually observable inhomogeneities in polymer films, sheets and other articles which are typically seen as tiny dots in a final blown film or article. The presence of such imperfections in a polymer product is seldom tolerated by customers so the polymer chemist is constantly striving to eliminate them.

The gels or fish eyes can be caused in a variety of ways. Thus, gels may be a result of regions of polymer having different properties than the bulk of the polymer, e.g. a different average molecular weight, typically a higher molecular weight than the bulk of the polymer. This may be caused by contamination of the polymer by another polymer e.g. during storage, in transportation vessels, or in transport lines. Contamination might also occur in process apparatus where other polymer may have agglomerated, e.g. in a reactor where polymer has adhered to the wall of the reactor.

Gels or fish eyes could also be the result of badly dispersed additives or other non-meltable substances coming from the production environment like filter fibres, packaging residues etc.

It is also possible that the catalyst employed in the polymer manufacture could be contaminated by tiny fractions of other catalyst material which responds differently under the polymerisation process conditions to that of the bulk of the catalyst and therefore produces a different polymer and hence gels. The presence, for example, of a tiny amount of Ziegler-Natta catalyst in a metallocene catalyst batch could cause the formation of tiny areas of higher molecular weight material in the formed polymer which would manifest themselves as gels.

Most often however, gels are the result of inhomogeneities in the catalyst itself. The majority of catalysts used industrially are carried on some form of solid support. The formation of such a catalyst normally involves impregnation of a procatalyst and cocatalyst (or a mixture thereof) onto support particles. Where a catalyst is impregnated onto a solid support much care is taken to try to ensure homogeneous loading onto the catalysts particles. However, some of the catalyst particles may contain no procatalyst and/or cocatalyst or only very small amounts of procatalyst and/or cocatalyst. Such particles will be inactive during a polymerisation reaction and will therefore remain unfragmented. They therefore pass through into the final polymer product and may be observable as gels in articles/films formed therefrom. A catalyst comprising an unacceptable level of such particles would be regarded as inhomogeneous.

Catalyst gels can also be formed by poisoning of catalyst during catalyst preparation. It is known that even small quantity of air or moisture can destroy at least part of a catalyst. This partial poisoning can happen when feeding catalyst components into a reaction vessel, during catalyst preparation in the reaction vessel or during catalyst transport from the reaction vessel into catalyst containers. Catalyst poisoning may also occur during prolonged transportation or storage. All these poisoning processes will cause catalyst inhomogeneity that will in turn cause inhomogeneity in final polymer product.

On an industrial scale, the formation of polymer products containing gels has large economic ramifications. Should this occur large amounts of polymer may need to thrown away as the formed polymer would have unacceptable properties with respect to homogeneity. The presence of gels in a polymer product is therefore a real problem for the polymer chemist.

It would therefore be useful if the polymer chemist could be sure before an industrial polymerisation reaction is run that the material produced is unlikely to give rise to gels in polymer articles and films. It would also be useful if the polymer chemist could assess whether a catalyst in development was likely to give rise to gels in a polymer product without having to produce large quantities of such a development batch. It is important therefore to determine whether the catalyst is homogeneous.

Previously, it has been difficult and laborious to study inhomogeneity in the catalyst itself and then tailor production to avoid inhomogeneity. The most commonly used method involves SEM/EDS (scanning electron microscopy and energy dispersive spectrometer analysis) which provide elemental distribution measurements for metals such as Al/Zr/Hf/Ti/Mg/Si among catalyst particles. However, this method gives the elemental distribution of a limited number of catalyst particles, is exceedingly costly and laborious.

Thus, whilst this method may tell if some measured particles contain the wrong components or lower chemical loading, statistically the method is weak. It can measure only a small number of particles and in reality billions of particles/g catalyst are present. Also, SEM/EDS does not tell the user if a catalyst is poisoned. In a poisoned catalyst, the necessary catalyst components (e.g. Al or Zr) are present but are deactivated and it is impossible to distinguish poisoned particles from non-poisoned particles by SEM/EDS.

SEM/EDS is also a very time-consuming analysis. The catalyst has to be totally dead before embedding it into an epoxy resin for analysis otherwise it will react with the embedding material and foam it. This can take several days. The hardening time of epoxy material is at least 8 to 12 hours. After hardening there is are multi-phased grinding, polishing and washing steps with drying. Before mapping you have to coat the polished surface with carbon to make it conductive.

Even then, the element maps produced show only the elemental distribution of particular elements and do not confirm whether particles are capable of catalysing polymerisation. It also provides little useful information for quality control.

As an alternative method for checking catalyst inhomogeneity, the final polymer can be blown into a film or article and gels detected therein as evidence of inhomogeneities in the catalyst. However, this requires the use of a potentially inhomogeneous catalyst in a relatively large scale process (e.g. pilot plant or even production plant) to make sufficient polymer to be used in a film blowing process. This also means that expensive process time is utilised before the failure of catalyst can be seen. Moreover, to make large quantities of polymer requires large quantities of catalyst. Such a method is therefore expensive and useless when a new catalyst batch is being prepared as only small amounts of catalyst are prepared during catalyst development.

There remains therefore a need to devise an alternative method of assessing catalyst inhomogeneity without recourse to SEM/EDS or large scale polymerisation.

The present inventors have devised a new method allowing the rapid assessment of catalyst inhomogeneity. Surprisingly, it has been found that a compression moulded sheet of polymer can give an immediate indication as to whether a catalyst batch contains high levels of inhomogeneities and hence whether blown films and articles made using such a catalyst batch would contain gels. The method can be carried out on a very small sample size, is cheap and quick and is able to predict accurately whether the catalyst batch in question is suitable for use in an industrial polymerisation reactor. Moreover, since only a small sample is required, it provides the polymer chemist with an excellent tool for checking homogeneity in new catalysts during catalyst development.

Moreover, as the method involves the use of a small scale polymerisation reaction, the artisan can simultaneously measure, inter alia, the activity of catalyst, kinetics of catalyst and study the properties of polymer providing him with valuable data. Thus, not only can catalyst homogeneity be checked readily, but also many critical properties can be measured from a polymerisation run in small scale in a short time.

Thus, viewed from one aspect the invention provides a method for identifying whether a catalyst batch is inhomogeneous or homogeneous comprising:
(i) obtaining a sample from said catalyst batch;
(ii) polymerising at least one olefin in the presence of said sample to form an olefin polymer;
(iii) compression moulding at least a part of said olefin polymer to form a sheet having a thickness of 20 to 200 microns;
(iv) counting the number of gels present within said sheet or a given area thereof;
(v) depending on the number of gels counted in step (iv), determining whether the catalyst batch is inhomogeneous or homogeneous with reference to a standard.

By inhomogeneous catalyst batch is meant one which gives rise to a polymer which when formed into a polymer product gives an unacceptable level of gels. Conversely therefore, by homogeneous catalyst batch is meant one which gives rise to a polymer which when formed into a polymer product gives an acceptable level of gels.

By catalyst batch is meant an amount of catalyst, preferably all the catalyst having been prepared in the same operation.

By gels is meant visually observable inhomogeneities in polymer products. They are typically seen as tiny dots in a final polymer product and are observable under a microscope where they typically appear as darker often circular areas.

The first step in the method of the invention involves taking a sample of catalyst from a catalyst batch. This may be a batch which is destined for use in an industrial polymerisation process or perhaps a catalyst batch in development which needs to be tested to ensure it produces homogeneous polymers. The sample size is not critical although it should be greater than 0.5 g to ensure that sufficient catalyst material is taken to conduct the necessary polymerisation experiments and to ensure that a representative sample of catalyst batch is used. Whilst it is not envisaged that all the catalyst batch would be used in the method of the invention, should only a very small amount of material be available (e.g. during a catalyst development programme), the sample may constitute the entire catalyst batch. Preferably however, it constitutes only a portion thereof, especially a minor portion thereof, e.g. less than 5 wt% thereof.

There is no definitive upper limit for sample size but economic considerations dictate that this should be kept as small as possible. The larger the sample size, the costlier the sample and costlier the actual polymerisation to be carried out. Typical sample sizes are from 0.5 to 50 g, e.g. 1 to 10 g.

The sample may be divided into a number of sub-samples to allow the method the invention to be repeated using the same base sample. Each sub-sample may be of the order of 100 mg to 5 g in size, preferably 150 mg to 2 g, especially 200 mg to 1 g. The actual sample/sub-sample size will be governed to an extent by the size of the polymerisation reactor where the test polymerisation is to be carried out.

It will be appreciated that sample handling is conducted under inert conditions. Thus, sample handling may involve an argon atmosphere and the use of a glove box. The polymer chemist is well aware of the techniques required to handle these catalysts.

The catalyst can be any typical polymerisation catalyst but needs to be in particulate form. Thus, a single site catalyst such as a metallocene catalyst, chromium catalyst, vanadium catalyst, nickel catalyst or Ziegler-Natta catalyst could be tested using the method described herein as long as they are present in particulate form. One method of obtaining particle form catalysts is impregnating the components of the catalyst onto a particulate support. In a preferred embodiment therefore, the catalyst will be supported. Commonly used supports include alumina, silica and for Ziegler-Natta catalysts magnesium chloride. Polymer supports may also be used. It will be appreciated that many olefin polymerisation catalysts require the presence of a cocatalyst/external electron donors to function. The term catalyst is used herein to cover catalyst batches where the cocatalyst/electron donor is already present in the batch or where it is not present. If a required cocatalyst is not present, it may need to be added during the polymerisation stage. Thus, a catalyst batch could contain a supported metallocene compound such as biscyclopentadienyl zirconium dichloride but not the cocatalyst.

Preferably, the catalyst batch which is being tested will be in a form suitable for use as a catalyst directly, i.e. it will already contain any cocatalysts, electron donors, activators etc required.

Preferably, the catalyst is a metallocene catalyst which can be formed from a transition metal containing metallocene compound and a cocatalyst, e.g. an aluminoxane. This can be supported on any usual carrier support such as alumina or preferably silica. Numerous patent documents describe metallocene catalyst preparation and support loading and the homogeneity of all metallocene catalyst batches is detectable by the currently claimed method.

The test polymerisation is normally conducted in a small scale reactor, e.g. a bench scale reactor, using continuous, semi-batch or batch conditions. Batch or semi-batch conditions are preferred. The reactor may be from 100 cm³ to 10 dm³, e.g. 2 dm³ in volume.

The olefin or olefins used during the polymerisation reaction can be any alpha olefin, e.g. C₂₋₁₀ olefin. Preferably however, the olefin is ethylene or propylene especially propylene. Whilst a copolymer could be formed, e.g. an ethylene or propylene copolymer with a C₂₋₈ comonomer, the formation of a homopolymer is preferred.

An important aspect of the method of the invention is that conditions within the reactor should preferably remain homogeneous, i.e. no changes to the reactor conditions should take place during the polymerisation.

The polymerisation will preferably take place in the slurry phase or gas phase using typical diluents such as propane. Slurry phase polymerisation is preferred.

For slurry reactors, the reaction temperature will generally be in the range 60 to 110 °C (e.g. 80-110 °C), the reactor pressure will generally be in the range 5 to 80 bar (e.g. 50-65 bar), and the reaction time will generally be in the range 0.3 to 5 hours (e.g. 0.5 to 2 hours). Reaction time is not, however, critical rather it simply needs to be determined that a sufficient amount of polymer for the subsequent analysis is obtained. A suitable amount of polymer to be produced may thus be, for example, from about 50 to about 100 grams. The diluent used will generally be an aliphatic hydrocarbon having a boiling point in the range -70 to +100 °C.

For gas phase reactors, the reaction temperature used will generally be in the range 60 to 115 °C (e.g. 70 to 110 °C), the reactor pressure will generally be in the range 10 to 25 bar, and the reaction time will generally be 1 to 8 hours. Again however, reaction times should simply be sufficient to ensure that enough polymer is manufactured for testing. The gas used will commonly be a non-reactive gas such as nitrogen together with monomer (e.g. ethylene).

The polymerisation can be effected using hydrogen if desired although this is not normally required or preferred. Normally, the olefin is simply introduced continuously into the reactor under constant pressure until the desired amount of polymer has been formed. Gases can then be vented and the polymer recovered.

The amount of polymer formed during the reaction can vary over wide limits but sufficient polymer needs to be formed to carry out the further stages of the claimed method. Thus, at least 10 g of polymer should be formed, e.g. 20 to 1000 g. Productivity may be 10 to 1000 g polymer/g catalyst, e.g. 20 to 500 g polymer/g catalyst, preferably 50 to 100 g polymer/g catalyst.

A portion of the polymer formed is then compression moulded into a sheet. In compression moulding, an amount of material is placed in the lower half of a mould. The top half of the mould is then advanced into the matching bottom cavity and the system heated and pressurised to form a sheet of material in the mould.

In the present invention compression moulding may be carried out in any convenient fashion. Preferably it is carried out by cutting a slot in a film, e.g. a polyester film, to form a mould. This film is then placed on a support film which again conveniently may be polyester based. A portion of the polymer formed in the polymerisation process is placed in the slot and a third film (e.g. polyester film) placed on top.

These films can be of the order of 20 to 200 microns in thickness, e.g. 30 to 175 microns, preferably 40 to 150 microns, e.g. 50 to 100 microns, especially around 75 microns in thickness and may be approximately 20 to 30 cm square. The slot cut in the central film can be any size (e.g. 0.1 cm to 20 cm in either length or breadth) although a useful slot size is around 50 to 100 mm in either length or breadth, e.g. 50 mm by 100 mm. About 0.5 g of polymer is required to fill such a slot.

The slot should be filled such that the polymer material lies flush with the top of the central film, i.e. should just be in contact with the top film layer.

This mould can then be pressed and the polymer in the mould melted as is known in the art. The mould temperatures and pressures used can vary widely although it is essential that the sheet which is eventually formed is between 20 and 200 microns in thicknesses. Sheets larger than this may have inhomogeneities in multilayers making assessment of the presence of gels difficult. Thinner sheets start to have thicknesses of similar size to catalyst particles making gel detection difficult.

For detecting silica gels, which are due to inactive catalyst particles, the sheet should preferably from 50 to 90 microns thick, e.g. from 50 to 75 microns. For detecting polymer gels, which are due, for instance, to the presence of residual contaminants of a different catalyst in the sample, the preferred thickness of the sheet is from about 75 to 175 microns.

Pressures suitable to obtain such sheet thicknesses may be from 20 to 500 kN. Typically however, the pressure varies during the compression moulding procedure. Thus, an initial pressure may be 20 to 100 kN, e.g. 50 kN with a gradual increase to 200 to 300 kN, e.g. 260 kN. Pressures can be chosen depending on the nature of the press, the desired sheet thickness and to ensure a consistent sheet is formed having the desired dimensions.

The temperatures employed during the compression moulding process may also vary over the course of the compression but should not be so high as to melt the mould or degrade the polymer. It will be necessary, of course, to use a high enough temperature to melt the polymer in the slot. Preferably, temperatures should not exceed 200°C. Thus, the compression moulding temperature may be slowly increased from room temperature to approximately 150 to 200°C before being allowed to cool. For polypropylene polymers, temperatures of 180°C to 220°C may be required.

As long as reference samples and samples being tested are compression moulded using the same conditions, pressures and temperatures can be widely varied.

Compression moulding normally occurs in an automated machine which governs the pressure and temperature cycles as desired by the user. It also controls residence time within the mould. Typically the residence time is determined by the time taken to heat the mould to the target temperature, the time taken to hold the mould at the target temperature and pressure, and the cooling time. These times depend on the type and model of the equipment, as well as the target temperature. However, as an example, the whole cycle may take from 30 minutes to two hours. The skilled person will have knowledge of the use of such a machine.

A suitable protocol in this invention involves an initial pressure of 50 kN at ambient temperature, a pressure of 260 kN whilst the mould is heated to 200°C, holding the mould under that temperature and pressure for 10 minutes, allowing the mould to cool to 50°C under the same pressure and then allowing final cooling having removed the pressure.

The polymer is preferably not stabilised as such additives could disturb the analysis of gels in the formed sheet. Stabilisers are often added to the polymer in the form of flake-like particles and if not properly mixed into the polymer during moulding, the flakes may remain in the polymer and make it more difficult to detect the catalyst gels formed in the pressed sheet.

The pressed sheet may then be removed and observed for inhomogeneities, i.e. gels. The whole sheet could be assessed in this fashion or a given area thereof, e.g. a square mm thereof. This is normally achieved visually using a stereomicroscope, lighting from beneath the sample so that gels can be readily detected. A magnification of 50x is appropriate. Especially preferably, a photograph of the magnified pressed sheet can be taken and the number of inhomogeneities in a given area determined from the photograph. Gels can be readily seen in such photographs as imperfections in an otherwise smooth surface. It is also possible to use imaging software to identify and count the gels automatically. Such software is commercially available and persons familiar with microscope methods and gel analysis know how to implement and use such software.

Typically, a plurality of pressed sheets can be prepared from the polymer formed in the polymerisation process so that an average of gels can be calculated over a number of compression moulded sheets.

In order to determine whether the catalyst batch is acceptable, it is necessary to compare the number of gels found in the pressed sheet (or within a given area of the pressed sheet) with a typically predetermined threshold value. Thus, if the sheets prepared had fewer than a certain number of gels then the catalyst batch would be deemed acceptable, i.e. homogeneous. Sheets with more than the threshold number of gels would be deemed unacceptable indicating inhomogeneity in the catalyst.

The threshold value could vary depending on the nature of the polymer and the nature of articles to be made therefrom. A threshold value could be established by, for example, comparing the sample with one prepared under identical conditions but using a catalyst system known to give gel free products. Alternatively, a known gel free polymer could be mixed with carrier particles (to simulate the presence of non-reactive catalyst particles) and subjected to compression moulding as described above to provide an idea of how many gels would be acceptable.

For example, for a 1.3 mm by 1.0 mm by 75 micron sheet, the total number of gels present should preferably be less than 40, preferably less than 30, especially less than 10. A gel number less than 40 is indicative of the fact that the starting catalyst material is homogeneous. A gel number greater than 40 suggests inhomogeneity in the original catalyst batch.

Using the method of the invention, it is possible to see catalyst particles which are inactive in the polymerisation as these appear as inhomogeneities in the compression moulded sheets. It is even possible to isolate said particles and examine them using SEM/EDS to provide the skilled man with more information about elemental distribution and hence an idea as to why the inhomogeneity is occurring.

This method could therefore be incorporated into any catalyst manufacturing process to check that batches being prepared are on specification and are therefore suitable for use in an industrial process. It could also be used during catalyst development to determine whether new batches of catalyst are homogeneous.

The entire method can be carried out in a matter of hours, as it takes only about 1 to 3 hours for the polymerisation and from about 1 to 2 hours for pressing and analysing the gels. Assessment of inhomogeneity is therefore rapid.

Viewed from a further aspect the invention provides a method for producing a batch of homogeneous particulate catalyst comprising:
(i) obtaining a particulate catalyst;
(ii) obtaining a sample of said catalyst;
(iii) polymerising at least one olefin in the presence of said sample to form an olefin polymer;
(iv) compression moulding at least a part of said olefin polymer to form a sheet having a thickness of 20 to 200 microns;
(v) counting the number of gels within said sheet or a given area thereof;
(vi) accepting the catalyst batch as homogeneous if the number of gels counted in step (v) is less than a reference standard.

It is believed that no-one before has appreciated that the presence of gels in thin compression moulded sheets can be directly correlated to catalyst inhomogeneity. Thus, viewed from another aspect the invention provides the use of a compression moulded sheet of a polymer to indicate the presence of inhomogeneities in a catalyst used to make said polymer.

The process of the invention can therefore be incorporated into an industrial polymersation process to ensure that polymerisation is effected using a homogeneous catalyst batch. Thus, viewed from a further aspect, the invention provides a process for the preparation of a polyolefin comprising:
(i) obtaining a particulate catalyst;
(ii) obtaining a sample of said catalyst;
(iii) polymerising at least one olefin in the presence of said sample to form an olefin polymer;
(iv) compression moulding at least a part of said olefin polymer to form a sheet having a thickness of 20 to 200 microns;
(v) counting the number of gels within said sheet or a given area thereof;
(vi) accepting the particulate catalyst of part (i) as homogeneous if the number of gels counted in step (v) is less than a reference standard;
(vii) transferring at least a part of the particulate catalyst of part (i) to a polymerisation reactor if it is deemed acceptable in part (vi); and
(viii) polymerising at least one alpha olefin in the presence of said catalyst so as to form a polyolefin.

The invention will now be illustrated further by reference to the following non-limiting Examples and Figures.
Figure 1 is a photograph of reference standard 1.
Figure 2 is a photograph of reference standard 2.
Figure 3 is a photograph of reference standard 3.
Figure 4 is a photograph of the sheet produced in Example 2.
Figure 5 is a photograph of the sheet produced in Example 3
Figure 6 is a electron micrograph of the catalyst batch of Example 2.
Figure 7 is a electron micrograph of the catalyst batch of Example 3.

### Example 1 - Reference Standards

### Preparation of the gel free reference polymer

A predetermined amount ofrac-Et[Indenyl]₂ZrCl₂ was mixed in 600 ml toluene with methylaluminiumoxane in such amount that the molar ratio Al/Zr was 1000 mol/mol. The reaction product was dissolved in the toluene at room temperature.

The polymerisation was conducted in a 2 L stainless steel autoclave reactor equipped with a paddle stirrer and a continuous supply of ethylene. 600 mL of toluene was added to the reactor at room temperature, followed by the addition of the 600 mL catalyst solution in toluene from a catalyst feeding funnel. The reactor was heated to +80°C, after which the polymerisation was started at that temperature by starting the ethylene feed into the reactor. Ethylene was introduced continuously into the reactor to maintain a constant partial pressure of ethylene of 5 bar. After one hour of polymerisation the reaction was terminated by releasing the pressure and venting the reactor contents. The polymer was recovered and dried.

The following standards where prepared by combining the gel free HDPE prepared as described above with silica particles and compression moulding the polymer under the following conditions:

The mould was prepared from three polyester films having a thickness of 75 microns and size of about 200 mm by 300 mm. In the film to be placed in the middle, a slot of 50 by 100 mm was cut, and in this slot was put about 0.5 grams of the polymer described above.

The mould containing the polymer was pressed to initial pressure of 50 kN at ambient temperature. Then the pressure was increased to of 260 kN whilst the mould was heated to 200°C and the mould was held under that temperature and pressure for 10 minutes. Then, the mould was allowed to cool to 50°C under the same pressure: After that the pressure was released and the mould was allowed to cool to ambient temperature.

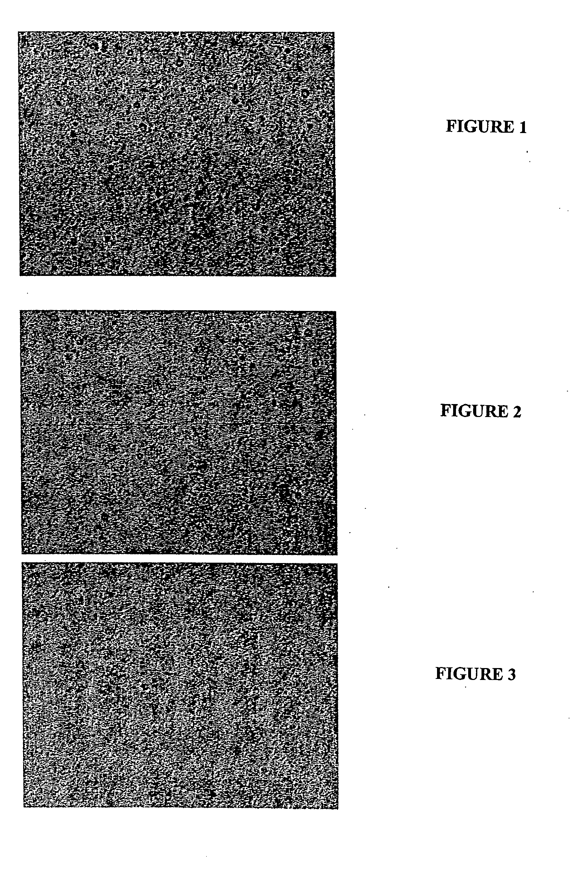

Each standard (shown in Figures 1 to 3) is 1.3 mm by 1.0 mm by 75 microns
Standard 1: 10 mg silica particles in 1 g HDPE contains 170 gels. Represents a polymer in which 50% of the catalyst particles fail to polymerise. A photograph of the standard is shown in Figure 1.
Standard 2: 2 mg in 1 g HDPE. contains 30-40 gels. Represents a polymer in which 10% of the catalyst particles fail to polymerise. A photograph of the standard is shown in Figure 2.
Standard 3: 0.5 mg in 1 g HDPE. contains 5-10 gels. Represents a polymer in which 2.5% of the catalyst particles fail to polymerise. A photograph of the standard is shown in Figure 3.

The lower the level of gels the better however, Standards 2 and especially standard 3 represent catalyst batches which would be suitable for large scale use.

### Example 2

### Catalyst preparation:

Complex solution of 38.3 mg bis(n-BuCp)₂HfBz₂, and 2.86 ml of 30 wt-% MAO in toluene was prepared. Complex solution was allowed to mix for 30 minutes. Prepared catalyst solution was added slowly onto 2.0 g activated silica SP9-393A (Grace silica carrier) in a small septa bottle. Catalyst was mixed for one hour after which it was dried for two hours at 50 °C under nitrogen flow. Ready made catalyst has Al/Hf = 200 mol/mol and 0.40 wt-% Hf content.

Polymerisation: 500 mg of the supported metallocene catalyst is charged in the catalyst feeding funnel. The catalyst is then fed into the reactor as described below.

Polymerisation of ethylene and 1-hexene is carried out in a 2 L stainless steel autoclave reactor equipped with a paddle stirrer and a continuous supply of ethylene. 600 mL of isobutane is added to the reactor at room temperature, followed by the addition of the catalyst from a catalyst feeding funnel with additional 600 mL of isobutane. The reactor is heated to +80 °C, after which the polymerisation is started at that temperature by adding 30 mL of 1-hexene in one batch. At the same time the ethylene feed into the reactor is started. Ethylene is introduced continuously into the reactor to maintain a constant pressure of 12.1 bar within the reactor (corresponding to a partial pressure of ethylene of 3 bar). After reaching polymerisation degree of about 100 g/g cat, typically after about 30 minutes, the reaction is terminated by releasing the pressure and venting the reactor contents.

A sample of the polymer prepared above was taken and a sheet was compression moulded as described in example 1.

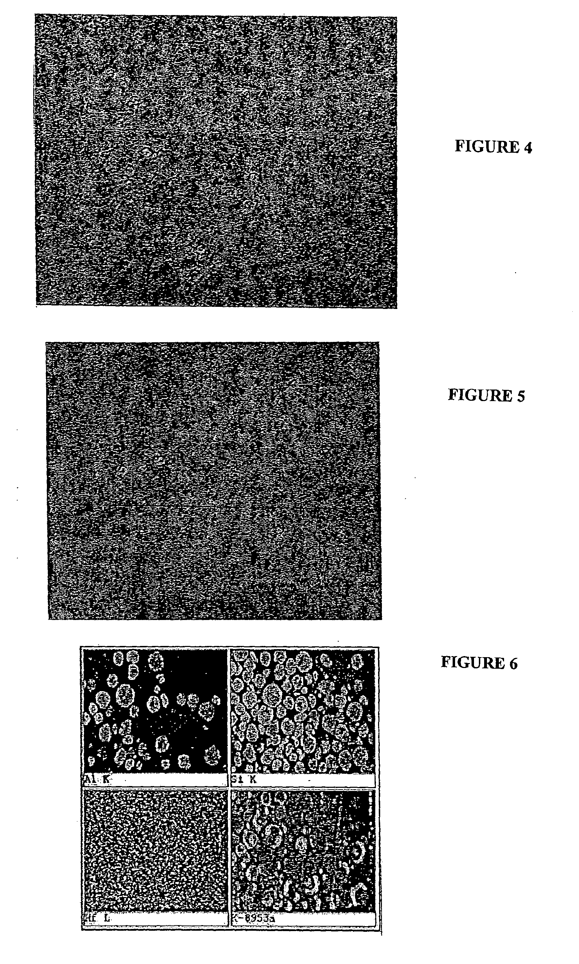

A photograph of the sheet formed is shown in Figure 4. It will clearly be seen that a large number of gels are present, greater than 40. This catalyst batch is therefore unacceptable and inhomogeneous.

### Example 3

Catalyst preparation: Complex solution of 109.8 mg bis(n-BuCp)₂HfBz₂, 8.0 ml of 30 wt-% MAO in toluene, and 13.0 ml of toluene was prepared. Complex solution was allowed to mix for 30 minutes. Prepared catalyst solution was added slowly onto 5.0 g activated silica SP9-393A (Grace silica carrier). Catalyst was mixed for one hour after which it was dried for two hours at 50°C under nitrogen flow. Ready made catalyst has Al/Hf = 200 mol/mol and 0.45 wt-% Hf content.

A sample of the polymer prepared above was taken and a sheet was compression moulded as described in example 1.

A photograph of the formed sheet is shown in Figure 5. It is clearly seen that the sheet is has few gels (less than 12) meaning the catalyst batch is homogeneous.

### Example 4 SEM/EDS

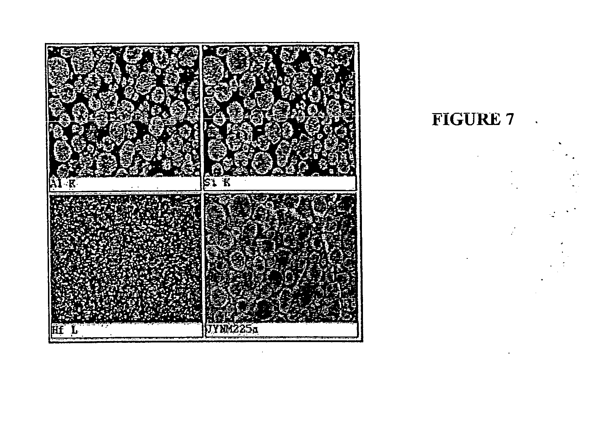

SEM/EDS analysis has also been carried out on the catalyst batches of examples 2 and 3. First the catalyst particles were inactivated by keeping them in air for three days. The inactivated particles were embedded into epoxy and the composition was allowed to harden for 12 hours. After hardening the surface was polished, washed and dried. Finally, the polished surface was coated with carbon to make it conductive. The thus obtained sample was analysed by SEM/EDS to analyse the aluminium, silicon and hafnium contents as it is known in the art. The electron micrographs obtained are shown in Figures 6 and 7 for the elements Al, Si, Hf, as well as an overall SEM picture of the particles included in the SEM analysis

The spheres in the micrographs are areas where the respective element can be found. As silica is the carrier material, every particle in the analysed area is visible in the micrograph is shown in the Si box. In figure 6, it can be seen that many of the particles present in the Si box are not present in Al-analysis box, meaning that these particles do not contain Al. The pressed plate Figure 4 shows a large number of gels in the polymer. This, in combination with the information from SEM, suggests that the inhomogeneity is due to particles not containing alumoxane, which particles are therefore inactive. The silica remains unfragmented in the polymer and appears as gels.

The Example 3 catalyst contains less particles not containing Al. This can be seen from the fact that nearly all particles visible in the Si-analysis picture are also visible in the Al-analysis picture.

## Claims

1. A method for identifying whether a catalyst batch is inhomogeneous or homogeneous comprising:
(i) obtaining a sample from said catalyst batch;
(ii) polymerising at least one olefin in the presence of said sample to form an olefin polymer;
(iii) compression moulding at least a part of said olefin polymer to form a sheet having a thickness of 20 to 200 microns;
(iv) counting the number of gels present within said sheet or a given area thereof;
(v) depending on the number of gels counted in step (iv), determining whether the catalyst batch is inhomogeneous or homogeneous with reference to a standard.

2. A method as claimed in claim 1 wherein said olefin is ethylene or propylene.

3. A method as claimed in claim 1 or 2 wherein said sheet has a thickness of 50 to 175 microns.

4. A method as claimed in any one of claims 1 to 3 wherein said sample is 1 to 10 g in weight.

5. A method as claimed in any one of claims 1 to 4 wherein said catalyst is a metallocene.

6. A method for producing a batch of homogeneous particulate catalyst comprising:
(i) obtaining a particulate catalyst;
(ii) obtaining a sample of said catalyst;
(iii) polymerising at least one olefin in the presence of said sample to form an olefin polymer;
(iv) compression moulding at least a part of said olefin polymer to form a sheet having a thickness of 20 to 200 microns;
(v) counting the number of gels within said sheet or a given area thereof;
(vi) accepting the catalyst batch as homogeneous if the number of gels counted in step (v), is less than a reference standard.

7. Use of a compression moulded sheet of a polymer to indicate the presence of inhomogeneities in a catalyst used to make said polymer.

8. A process for the preparation of a polyolefin comprising:
(i) obtaining a particulate catalyst;
(ii) obtaining a sample of said catalyst;
(iii) polymerising at least one olefin in the presence of said sample to form an olefin polymer;
(iv) compression moulding at least a part of said olefin polymer to form a sheet having a thickness of 20 to 200 microns;
(v) counting the number of gels within said sheet or a given area thereof;
(vi) accepting the particulate catalyst of part (i) as homogeneous if the number of gels counted in step (v) is less than a reference standard;
(vii) transferring at least a part of the particulate catalyst of part (i) to a polymerisation reactor if it is deemed acceptable in part (vi); and
(viii) polymerising at least one alpha olefin in the presence of said catalyst so as to form a polyolefin.
